# NEUE EUROPÄISCHE PATENTSCHRIFT

(11) **EP 0 354 925 B2**
(45) Veröffentlichungstag und Bekanntmachung des Hinweises auf die Entscheidung über den Einspruch: **19.10.1994**
(45) Hinweis auf die Patenterteilung: 11.09.1991
(21) Anmeldenummer: 88905197.5
(22) Anmeldetag: 09.06.1988
(51) Int. Cl.: B65G 15/08

(54) **ROLLGURT**
ROLLER BELT
BANDE TRANSPORTEUSE

(30) Priorität: 12.06.1987 DE 3719608; 23.07.1987 DE 3724376
(43) Veröffentlichungstag der Anmeldung: 21.02.1990
(73) Patentinhaber: PWH Anlagen + Systeme GmbH, D-66386 St. Ingbert-Rohrbach (DE)
(72) Erfinder: STEINKÖTTER, Franz-Albert, D-5303 Walberberg (DE)
(74) Vertreter: John, Ernst
(86) Internationale Anmeldenummer: EP8800510
(87) Internationale Veröffentlichungsnummer: WO8809759

(56) Entgegenhaltungen:
- EP-A- 0 050 962
- EP-A- 0 194 509
- EP-A- 0 253 148
- DE-A- 3 145 899
- DE-A- 3 506 947
- DE-A- 3 620 906
- DE-A- 3 624 122
- DE-U- 8 505 553
- PATENT ABSTRACTS OF JAPAN, Vol. 10, No. 115 (M-474) (2172) 30 April 1986; & JP-A-60244705 (TOUKAI GOMU KOGYO) 04-12-1985
- Fördergut-Handbuch, Seite 254 (1967)

## Beschreibung

Die Erfindung betrifft einen in Umfangsrichtung geschlossenen Rollgurt mit sich überlappenden Gurtkanten, der entlang einer Förderstrecke durch mehrere Tragrollenstationen hindurchführbar ist, wobei die jeweiligen Tragrollenstationen mit mehreren am Außenumfang des Rollgurtes anliegenden Gurtstützrollen versehen sind.

Durch die DE-A 3620906 ist ein Rollgurt bekannt, der die Merkmale des gattungsbildenden Teiles des Hauptpatentanspruches aufweist. Darüberhinaus ist zwischen Transport- und Rücklauftrum lediglich eine gemeinsame Gurtstützrolle vorgesehen. Es ist bekannt, daß die Rollgurtförderer nicht immer die gewünschte Geometrie einhalten, die für eine optimale Anordnung der Gurtstützrollen notwendig ist. Es kommt bei allen bekannten Anordnungen zum Anlaufen der jeweiligen Gurtkante der außen überlappenden Seite an eine Gurtstützrollenkante, wodurch der Gurt immer wieder stark beschädigt wird und zum frühzeitigen Ablegen gelangt. Sofern in den Gurtaußenzonen, d.h. im Randbereich, dann auch noch Zugseile eingearbeitet sind, so werden diese Zugseile ebenfalls angegriffen und schleißen schließlich durch.

Zur Verbesserung der Rollgurtführung, werden dann die unterschiedlichsten Hilfsmittel eingesetzt, um das Wandern des Gurtes zu verhindern oder zu beeinträchtigen. Es werden z.B. Leit- und Steuerrollen eingesetzt oder Gurtstutzrollen auf Sturz gestellt (s. z.B. DE-A 3145899).

Alle diese Einrichtungen haben jedoch den Nachteil, daß sie einen zusätzlichen Aufwand erforderlich machen und daß durch die dabei entstehenden zusätzlichen Reibungen ein frühzeitiger Verschleiß einsetzt und zwar bei erhöhter Antriebsleistung.

Durch die EP-A 50962 ist ein Fördergurt bekannt, der bei Überlappung seiner beiden Gurtenden in zylindrische Form gebracht werden kann. Beschrieben wird der spezielle Materialaufbau des Fördergurtes, der aus einer oberen sowie einer unteren gummiartigen Deckschicht sowie einem dazwischen angeordneten Kernbereich gebildet ist, wobei die einzelnen Materialbereiche unterschiedliche Steifigkeiten aufweisen, um so den Einrollvorgang besser bewerkstelligen zu können. Der Rollgurt wird analog zum vorab beschriebenen St.d.T. (DE-A 3620906, DE-A 3145899) durch, mit Gurtstützrollen versehene Tragrollenstationen hindurchgeführt.

Die zwar in den Figuren angedeutete unsymmetrische Anordnung der Gurtstützrollen in Verbindung mit unterschiedlichen Rollenlängen ist jedoch nicht in der Lage, bei Drehungen des Rollgurtes eine sichere Führung der geschlossenen Gurtkanten in Umfangerichtung zu gewährieisten, so daß es auch hier geschehen kann, daß sich die äußere Gurtkante zwischen zwei Gurtstützrollen schiebt und so evtl. zu Beschädigungen oder Zerstörungen am Gurt bzw. an den jeweiligen Gurtstützrollen beiträgt.

Der Erfindung liegt somit die Aufgabe zugrunde, einen im gattungsbildenden Teil des ersten Patentanspruches beschriebenen Rollgurt dahingehend weiterzubilden, daß er sich auf der Strecke, ohne an irgendwelche Kanten von Gurtstützrollen anzulaufen, innerhalb der Gurtstüzrollen in Umfangsrichtung frei bewegen kann, um, in Abhängigkeit vom Beladezustand sowie von äußeren Einflüssen wie Sonne, Regen oder dgl., immer seine optimale Lage einnehmen zu können, wobei ein Öffnen auf der Strecke vermieden werden soll.

Diese Aufgabe wird erfindungsgemäß durch den Gegenstand des Anspruchs 1 gelöst.

Durch diese Maßnahme wird erreicht, daß die einander überlappenden Kanten, d.h. die jeweils radial außenliegende Kante des Rollgurtes, bei Drehung in Umfangsrichtung, nicht mehr an den Kanten der folgenden Gurtstützrollen anläuft. Beschädigungen an den Gurtkanten werden dadurch vermieden, d.h. die Standzeit des Gurtes wird erhöht. Die jeweils außenliegende Kante läuft bei Verdrehung des Gurtes unmittelbar an der Lauffläche der folgenden Gurtstützrollen an (Keilwirkung):

Sinnvolle Weiterbildungen des Erfindungsgegenstandes sind den Unteransprüchen zu entnehmen.

Der Erfindungsgegenstand ist sowohl bei feststehenden Gurtstützrollen als auch bei Tragrollengirlanden anwendbar, auch wenn hier eine unterschiedliche Gurtstützrollenanzahl zugrunde gelegt wird ; nämlich bei feststehenden Gurtstützrollen eine ungerade Anzahl (5, 7, 9) und bei Tragrollengirlanden eine gerade Anzahl (vorzugsweise 6).

Die Anordnung der Gunstützrollen wird so gehalten, daß jede Gurtstützrolle an einem Ende durch die folgende Gurtstützrolle eine Überlappung erfährt, wobei alle Gurtstüzrollen z.B. im Uhrzeigersinn oder alle entgegengesetzt angeordnet werden, je nachdem wie die Überlappung der Gurtkanten gewählt wird. Auf jeden Fall müssen die Überlappungen von Gurtstützrollen und Gurt gleichgerichtet sein. Die Schrägstellung jeder folgenden Gurtstützrolle veranlaßt den Rollgurt, in Umfangsrichtung weiter zu wandern, ohne der jeweiligen Gurtkante Widerstand entgegenzusetzen. Ein Rückverdrehen des Rollgurtes ist ebenfalls problemlos, da es dabei nicht zur Anlage der überlappenden Gurtkante kommt.

Die erfindungsgemäße Ausbildung und Anordnung der Gurtstützrollen gibt dem Rollgurt somit die Möglichkeit der freien Bewegung in Umfangsrichtung und zwar ohne Anwendung von Zwangskräften. Er kann sich je nach Gegebenheit seine für ihn optimale Lage selber aussuchen, ohne daß man Gefahr läuft, daß es zu einem ungewollten Öffnen des Rollgurtes auf der Förderstrecke sowie Anlegen der Gurtkanten an eine Außenkante einer Gurtrolle mit den damit zerstörend wirkenden Folgen kommt. Die Erfindung ist in der Zeichnung dargestellt und wird wie folgt beschrieben. Es zeigen :

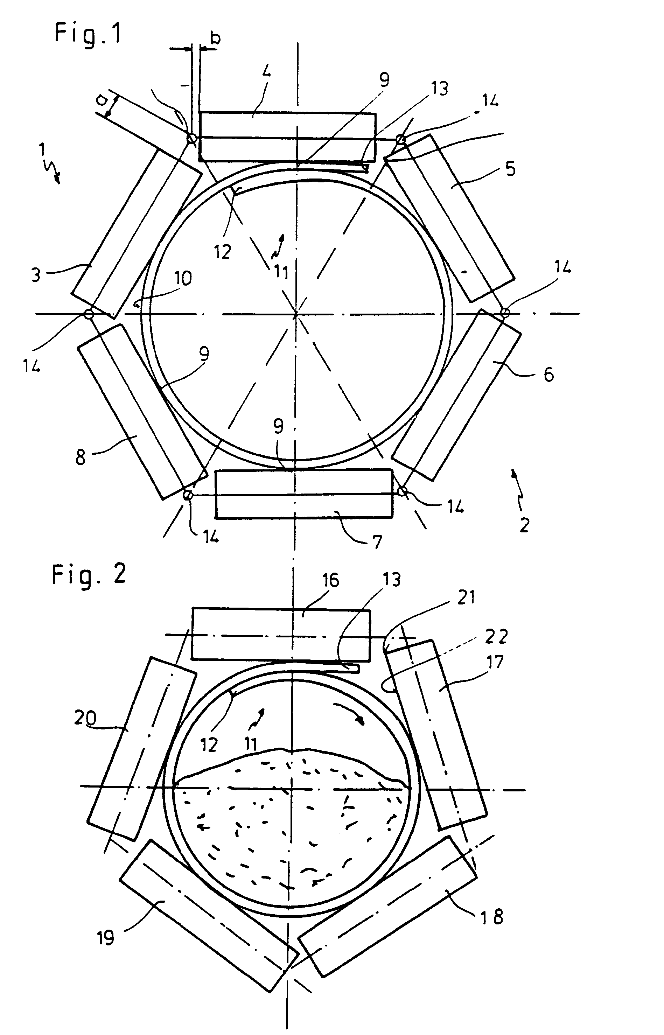

Fig. 1-3 Prinzipskizzen des erfindungsgemäßen Rollgurtes in verschiedenen Ausführungen
Figur 1 zeigt einen Rollgurtförderer, der in einer nicht weiter dargestellten Tragrollenstation durch obere und untere Tragrollengirlanden 1 und 2 gehalten wird. Jede Tragrollengirlande 1,2 besteht aus drei Gurtstützrollen 3, 4, 5 und 6, 7, 8, die mit ihren Laufflächen 9 am Außenumfang 10 des Rollgurtes anliegen. Im Bereich der Gurtstüzrolle 4, die im wesentlichen Horizontal angeordnet ist, befindet sich der Überlappungsbereich 11, wo die Gurtkanten 12, 13 aufeinandertiegen. Die Gurstützrollen 3-8 sind jeweils nur über einen einzigen Gelenkpunkt 14 miteinander verbunden, der so angeordnet ist, daß die Gurtstützrollen 3-8 einander überlappen. Diese Überlappung wird durch unterschiedliche Abstände a, b herbeigeführt und sie verhindert ein Anlaufen der Gurtkante 13 z.B. an der Kante 15 der folgenden Gurtstützrolle 5. Die Gurtstützrollen 3-8 sind in diesem Beispiel geradzahlig ausgebildet.
Figur 2 zeigt einen Rollgurtförderer gleicher Bauweise wie in Figur 1, mit sich überlappenden Gurtkanten 12,13. Hier sind jedoch nur 5 feststehende Gurtstützrollen 16, 17, 18, 19, 20 vorgesehen, wobei der Überlappungsbereich 11 auch hier im Bereich einer etwa horizontal veriaufenden Gurtstützrolle 16 vorgesehen ist, Durch Überlagerung der Gurtstützrollen 16-20 wird auch hier verhindert, daß die Gurtkante 13 die Kante 21 der nachfolgenden Gurtstützrolle 17 betührt. Bei Drehen des Rollgurtes im Uhrzeigersinn läuft die Gurtkante 13 unmittelbar auf die Lauffläche 22 der Gurtstützrolle 17 und wird so vor Beschädigungen geschützt.

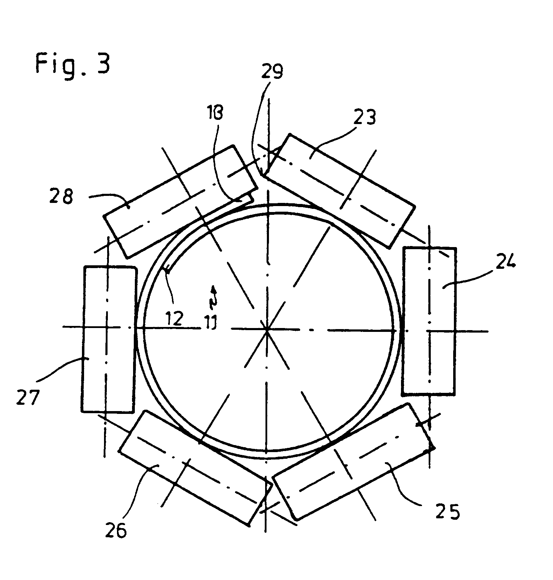

Figur 3 zeigt einen Rollgurt mit sechs Gurtstützrollen 23-28, die dergestalt angeordnet sind, daß im oberen und unteren Bereich des Rollgurtes eine etwa V-förmige Unterstützung gebildet wird, während die seitlichen Gurtstützrollen 24, 27 im wesentlichen vertikal angeordnet sind. Auch hier sind die Gurtstützrollen 23-28 einander überlappend ausgebildet, so daß die Gurtkante 13 nicht an die Kante 29 der nachfolgenden Gurtstützrolle 23 stoßen kann. Der Überlappungsbereich 11 ist in diesem Beispiel etwa 30 _{°} versetzt zur Vertikalen vorgesehen und liegt an der Gurtstützrolle 28 an.

## Patentansprüche

1. Transportanordnung mit einem in Umfangsrichtung geschlossener Rollgurt mit sich überlappenden Gurtkanten (12, 13), und mit mehreren Tragrollenstationen, durch die der Rollgurt entlang einer Förderstrecke hindurchführbar ist, wobei die jeweiligen Tragrollenstationen mit mehreren am Außenumfang des Rollgurtes anliegenden Gurtstützrollen (3-8, 16-20, 23-28) versehen sind, gekennzeichnet durch die Kombination nachstehender Merkmale :
- ein Ende jeder Gurtstützrolle (3-8, 16-20, 23-28) erfährt durch die in Umfangsrichtung folgende Gurtstützrolle eine Überlappung, so daß die axiale Verlängerung der am Rollgurt anliegenden Lauffläche (9) der jeweiligen Gurtstützrolle in Umfangsrichtung gesehen die Lauffläche (22) der in Umfangrichtung nachfolgenden Gurtstützrolle schneidet
- die Überlappungen sämtlicher Gurtstützrollen (3-8, 16-20, 23-28) sind, in Umfangsrichtung gesehen, gleichgerichtet,
- der Überlappungssinn der Gurtkante (12, 13) ist dem Überlappungssinn der Gurtstützrollen entgegengerichtet.

2. Rollgurt nach Anspruch 1, dadurch gekennzeichnet, daß die Überlappungsrichtung der Gurtstützrollen (3-8, 16-20, 23-28) in Abhängigkeit vom Überlappungssinn der Gurtkanten (12, 13) einstellbar ist.

3. Rollgurt nach den Ansprüchen 1 und 2. dadurch gekennzeichnet, daß die Gurtstützrollen (3-8, 16-20, 23-28) so angeordnet sind, daß der Rollgurt zumindest im Transporttrum auf zwei V-förmigen Gurtstützrollen (18, 19, 25, 26) aufliegt.

4. Rollgurt nach den Ansprüchen 1 bis 3, dadurch gekennzeichnet, daß bei den, in den Tragrollenstationen fest angeordneten Gurtstützrollen (16-20), die oberste Gurtstützrolle (16) im wesentlichen horizontal veläuft.

5. Rollgurt nach den Ansprüchen 1 bis 4, dadurch gekennzeichnet, daß bei ungerader Anzahl von Gurtstützrollen (16-20), die in Umfangsrichtung neben der horizontal angeordneten Gurtstützrolle (16) vorgesehenen Gurtstützrollen (17, 20) unter einer zur vertikalen Ebene geneigten Lage am Umfang (10) des Rollgurtes anliegen.

6. Rollgurt nach den Ansprüchen 1 bis 5, dadurch gekennzeichnet, daß bei rücklaufenden Trum die im wesentlichen horizontale Gurtstützrolle unten liegt.

7. Rollgurt nach den Ansprüchen 1 bis 6, dadurch gekennzeichnet, daß bei Verwendung von Tragrollengirlanden (1, 2) zwischen den einzelnen Gurtstützrollen (3-8) lediglich ein Gelenkpunkt (14) vorgesehen ist.

8. Rollgurt nach Anspruch 7, dadurch gekennzeichnet, daß die Gelenkpunkte (14) der Girlanden (1, 2) zur jeweiligen Gurtstützrolle (3-8) so gelegt sind, daß eine Überlagerung bei den Rollenenden entsteht.

## Claims

1. Conveying arrangement with a roller belt closed in a peripheral direction with overlapping belt edges (12, 13) and with a plurality of carrying roller stations through which the roller belt can be led along a conveyor run, the respective carrying roller stations being provided with a plurality of belt support rollers (3-8, 16-20, 23-28) bearing on the outer periphery of the roller belt, characterised by the combination of the following features:
- one end of each belt support roller (3-8, 16-20, 23-28) is overlapped by the belt support roller which follows in a peripheral direction, so that the axial extension of the running surface (9) of the respective belt support roller bearing on the roller belt, seen in the peripheral direction, intersects the running surface (22) of the belt support roller which follows in the peripheral direction
- all the belt support rollers (3-8, 16-20, 23-28) overlap in the same direction, seen in a peripheral direction
- the direction of overlap of the belt edge (12, 13) is opposed to the direction of overlap of the belt support rollers.

2. Roller belt according to Claim 1, characterised in that the direction of overlap of the belt support rollers (3-8, 16-20, 23-28) is adjustable depending on the direction of overlap of the belt edges (12, 13).

3. Roller belt according to Claims 1 and 2, characterised in that the belt support rollers (3-8, 16-20, 23-28) are so arranged that the roller belt bears on two belt support rollers in a V-shape (18, 19, 25, 26), at least in the conveying portion.

4. Roller belt according to Claims 1 to 3, characterised in that in the case of the belt support rollers (16-20) fixedly arranged in the carrying roller stations, the uppermost belt support roller (16) runs substantially horizontally.

5. Roller belt according to Claims 1 to 4, characterised in that when there is an odd number of belt support rollers (16-20) the belt support rollers (17, 20) provided near the horizontally arranged belt support roller (16) in a peripheral direction bear on the periphery (10) of the roller belt in a position inclined with respect to the vertical plane.

6. Roller belt according to Claims 1 to 5, characterised in that in the case of the return portion, the substantially horizontal belt support roller lies at the bottom.

7. Roller belt according to Claims 1 to 6, characterised in that when using carrying roller garlands (1, 2), only one hinge point (14) is provided between the individual belt support rollers (3-8).

8. Roller belt according to Claim 7, characterised in that the hinge points (14) of the garlands (1, 2) are so placed in relation to the respective belt support roller (3-8) that an overlap is produced at the ends of the rollers.

## Revendications

1. Dispositif de transport comportant une courroie enroulée, refermée sur elle-même dans la direction circonférentielle, et qui possède des bords (12, 13) à recouvrement, et comportant plusieurs jeux de rouleaux supports grâce auxquels la courroie peut être guidée le long d'un trajet de transport, les jeux de rouleaux supports étant munis de plusieurs rouleaux d'appui de la courroie (3 à 8, 16 à 20, 23 à 28) qui sont en appui contre la circonférence extérieure de la courroie enroulée, caractérisé par la combinaison des caractéristiques suivantes :
- une extrémité de chaque rouleau (3 à 8, 16 à 20, 23 à 28) d'appui de la courroie est recouverte par le rouleau d'appui qui lui fait suite dans la direction circonférentielle, de sorte que le prolongement axial fictif de la surface de roulement (9) du rouleau d'appui considéré dans la direction circonférentielle, qui s'appuie contre la couroie enroulée coupe la surface de roulement (22) du rouleau d'appui qui y fait suite dans la direction circonférentielle ;
- les recouvrements de tous les rouleaux (3 à 8, 16 à 20, 23 à 28) d'appui de la courroie sont orientés dans le même sens, considérés dans la direction circonférentielle, le sens de recouvrement des bords (12, 13) de la courroie étant l'inverse du sens de recouvrement des rouleaux d'appui de la courroie.

2. Dispositif selon la revendication 1, caractérisé en ce que le sens du recouvrement des rouleaux d'appui (3 à 8, 16 à 20, 23 à 28) est réglable en fonction du sens de recouvrement des bords (12, 13) de la courroie.

3. Dispositif selon les revendications 1 et 2, caractérisé en ce que les rouleaux d'appui (3 à 8, 16 à 20, 23 à 28) sont disposés de telle manière que, du moins dans le brin de transport, la courroie enroulée s'appuie sur deux rouleaux d'appui (18, 19, 25, 26) disposés en V.

4. Dispositif selon les revendications 1 à 3, caractérisé en ce que, dans les rouleaux d'appui (16 à 20) disposés fixes dans les jeux de rouleaux supports, le rouleau d'appui extrême supérieur (16) s'étend sensiblement horizontalement.

5. Dispositif selon les revendications 1 à 4, caractérisé en ce que, dans les cas d'un nombre impair de rouleaux d'appui (16 à 20), les rouleaux d'appui (17, 20) qui sont prévus à côté du rouleau d'appui (16) disposé horizontalement, dans la direction circonférentielle sont en appui contre la circonférence (10) de la courroie enroulée dans une position inclinée par rapport au plan vertical.

6. Dispositif selon les revendications 1 à 5, caractérisé en ce que, dans le brin de retour, le rouleau d'appui sensiblement horizontal est situé en bas.

7. Dispositif selon les revendications 1 à 6, caractérisé en ce que, dans le cas où l'on utilise des guirlandes de rouleaux supports (1, 2), il est prévu un seul point d'articulation (14) entre deux rouleaux d'appui (3 à 8).

8. Dispositif selon la revendication 7, caractérisé en' ce que les points d'articulation (14) des guirlandes (1, 2) sont disposés par rapport au rouleau d'appui (3 à 8) correspondant de telle manière qu'il se produise de recouvrement aux extrémités des rouleaux.
